# EUROPEAN PATENT SPECIFICATION

(11) **EP 3 614 845 B1**
(45) Date of publication and mention of the grant of the patent: **01.11.2023**
(21) Application number: 18790004.8
(22) Date of filing: 23.04.2018
(51) Int. Cl.: A01N 45/02, A01N 37/44, A01P 3/00

(54) **FUNGICIDAL COMBINATIONS**
FUNGIZIDE KOMBINATIONEN
COMBINAISONS FONGICIDES

(30) Priority: 27.04.2017 IN 201731014965
(43) Date of publication of application: 04.03.2020
(73) Proprietor: UPL Ltd, Haldia, West Bengal 721 602 (IN)
(72) Inventor: FABRI, Carlos, Eduardo, Sao Paulo - SP (BR); SHROFF, Rajju, Devidas, Mumbai Maharashtra 400051 (IN); SHROFF, Jaidev, Rajnikant, Dubai (AE); SHROFF, Vikram, Rajnikant, Dubai (AE)
(74) Representative: J A Kemp LLP
(86) International application number: PCT/IB2018/052794
(87) International publication number: WO 2018/198009

(56) References cited:
- WO-A1-2012/065944
- WO-A1-2014/105841
- WO-A1-2016/064589
- WO-A1-2017/063973
- US-A1- 2015 181 870
- US-A1- 2015 201 616

## Description

### Technical field:

The present invention relates to a combination of fungicides. More specifically, the present invention relates to fungicidal combinations comprising a succinate dehydrogenase inhibitor fungicide for controlling a broad spectrum of fungal diseases.

### Background of the invention:

Fungicides are important tools in the fight against plant diseases. They are used not just to protect and control plant fungal diseases but to improve yields and quality of the crops. Various fungicides that have been developed over the years have many desirable attributes such as specificity, systemicity, curative and eradicant action and high activity at low use rates.

Benzovindiflupyr is a pyrazolecarboxamide compound within the SDHI family of fungicides. It works by inhibiting the succinate dehydrogenase mechanism of the citric acid cycle, which is a functional part of the tricarboxylic cycle and is linked to the mitochondrial electron transport chain. It is known to control a broad spectrum of diseases.

Various other classes of fungicides are also known in the art, such as Quinone outside inhibitors (Qols), ergosterol-biosynthesis inhibitors, fungicides that act on multiple sites, fungicides that affect mitosis etc. These fungicides have been mixed with SDHI fungicides to achieve a broad spectrum of disease control. Cyanoacrylate-based fungicides are known for their unique mode of actions and selective action on fungi. Phenamacril is a cyanoacrylate fungicide that controls specific plant diseases.

CN105766927A teaches the combinations of cyanoacrylate fungicide with bixafen.

CN1027715028 teaches the combination of cyanoacrylate fungicide with fungicides such as isopyrazarr US2015181870 describes synergistic fungicides that may contain benzovindiflupyr or benzamacril.

There is a further need in the art for combinations that helps improve spectrum of plant disease control. With crop tolerances decreasing, lower use rates being imposed and resistance being increasingly observed, there is a need for a combination of actives that allows for broader disease control spectrum that combines curative and preventive actives and has a lower dosage.

Therefore, embodiments of the present invention may ameliorate one or more of the above mentioned problems:

### One or more advantages of the invention:

Therefore, embodiments of the present invention may provide combinations of fungicides that possess an enhanced efficacy over the individual fungicides used in isolation.

Another object of the present invention is to provide a fungicidal combination that causes an enhanced greening of the crops to which it is administered.

Yet another object of the present invention is to provide a fungicidal combination that results into reduced fungal disease incidence in the crops to which it is applied.

Another object of the present invention is to provide a fungicidal combination that achieves increased yield in the crops to which it is applied.

Some or all these and other objects of the invention are can be achieved by way of the invention described hereinafter.

### Summary of the invention:

Thus, an aspect of the present invention can provide a fungicidal combination comprising benzovindiflupyr; and phenamacril or benzamacril or a combination thereof.

Another aspect of the present invention can provide a fungicidal combination comprising benzovindiflupyr; and phenamacril or benzamacril or a combination thereof; and at least another fungicide.

Another aspect of the present invention can provide compositions comprising benzovindiflupyr; and benzamacril or phenamacril or a combination thereof.

Another aspect of the present invention can provide compositions comprising benzovindiflupyr; and benzamacril or phenamacril or a combination thereof; and at least another fungicide.

Another aspect of the present invention can provide a method of resistance management using a combination comprising benzovindiflupyr; and benzamacril or phenamacril or a combination thereof.

Another aspect of the present invention can provide a method of controlling/preventing fungal diseases at a locus by using a combination comprising benzovindiflupyr; and benzamacril or phenamacril or a combination thereof.

### Detailed Description:

The term 'disease control' as used herein denotes control and prevention of a disease. Controlling effects include all deviation from natural development, for example: killing, retardation, decrease of the fugal disease. The term 'plants' refers to all physical parts of a plant, including seeds, seedlings, saplings, roots, tubers, stems, stalks, foliage and fruits, The term "focus" of a plant as used herein is intended to embrace the place on which the plants are growing, where the plant propagation materials of the plants are sown or where the plant propagation materials of the plants will be placed into the soil. The term "plant propagation material" is understood to denote generative parts of a plant, such as seeds, vegetative material such as cuttings or tubers, roots, fruits, tubers, bulbs, rhizomes and parts of plants, germinated plants and young plants which are to be transplanted after germination or after emergence from the soil. These young plants may be protected before transplantation by a total or partial treatment by immersion. The term "agriculturally acceptable amount of active" refers to an amount of an active that kills or inhibits the plant disease for which control is desired, in an amount not significantly toxic to the plant being treated.

Benzovindiflupyr has the chemical name *N*-[(1*RS*,4*SR*)-9-(dichloromethylene)-1.2,3,4-tetrahydro-1,4-methanonaphthalen-5-yl]-3-(difluoromethyl)-1-methylpyrazole-4-carboxamide. It is known for controlling broad range of fungal diseases in various crops.

Phenamacril has the chemical name ethyl (2*EZ*)-3-amino-2-cyano-3-phenylacrylate. It is a cyanoacrylate fungicide, which is known to control certain fungi such as fusarium. Benzamacril has the chemical name (*EZ*)-3-[benzyl(methyl)amino]-2-cyanoacrylic acid, which is another cyanoacrylate fungicide. **Monogenic resistance to a new fungicide, JS399-19, in Gibberella zeae (**Chen et.al. Plant Pathology (2009) 58, 565-570**)** teaches discovery of five new Phenamacril resistant isolates for fusarium head blight. There is therefore, a need for resistance management that will allow increased control and decreased resistance.

It has been found that the addition of a cyanoacrylate fungicide such as phenamacril or benzamacril or a combination thereof to benzovindiflupyr leads to a synergistic action with broad spectrum control. It was surprising that the addition of a benzovindiflupyr to the cyanoacrylate fungicides resulted in an enhancement of the efficacy, and a surprising reduction in fungal disease incidence, seen only when these actives are combined. As will be demonstrated in the examples, the synergistic effect of the present combination is far superior to the combinations of the prior art.

These surprising advantages of the combinations of the invention were not observed when the either benzovindiflupyr or either of the cyanoacrylate fungicides were not present in the combination, or when benzovindiflupyr was replaced by similar compounds. Therefore, these unexpected advantages of the combination of the present invention could be attributed to synergism between the two active compounds or class of compounds of the present invention.

Thus, in an aspect, the present invention provides a fungicidal combination comprising:
(a) benzovindiflupyr; and
(b) phenamacril or benzamacril or a combination thereof.

The combination of the present invention may be used to control a broad spectrum of plant diseases, such as: Disease in rice; Blast (Magnaporthe grisea), Helminthosporium leaf spot (Cochliobolus miyabeanus), sheath blight (Rhizoctonia solani), and bakanae disease (Gibberella fujikuroi).

Diseases in wheat: powdery mildew (Erysiphe graminis), Fusarium head blight (Fusarium graminearum, F. avenacerum, F. culmorum, Microdochium nivale), rust (Puccinia striiformis, P. graminis, P. recondita), pink snow mold (Micronectriella nivale), Typhula snow blight (Typhula sp . ), loose smut (Ustilago tritici), bunt (Tilletia caries), eyespot (Pseudocercosporella herpotrichoides), leaf blotch (Mycosphaerella graminicola), glume blotch (Stagonospora nodorum), septoria, and yellow spot (Pyrenophora tritici-repentis).

Diseases of barley: powdery mildew (Erysiphe graminis), Fusarium head blight (Fusarium graminearum, F. avenacerum, F. culmorum, Microdochium nivale), rust (Puccinia striiformis, P. graminis, P. hordei), loose smut (Ustilago nuda), scald (Rhynchosporium secalis), net blotch (Pyrenophora teres), spot blotch (Cochliobolus sativus), leaf stripe (Pyrenophora graminea), and Rhizoctonia damping-off (Rhizoctonia solani),
Diseases in corn: smut (Ustilago maydis), brown spot (Cochliobolus heterostrophus), copper spot (Gloeocercospora sorghi), southern rust (Puccinia polysora), gray leaf spot (Cercospora zeae-maydis), white spot (Phaeosphaeria mydis and/or Pantoea ananatis) and Rhizoctonia damping-off (Rhizoctonia solani).

Diseases of citrus: melanose (Diaporthe citri), scab (Elsinoe fawcetti), penicillium rot (Penicillium digitatum, P.italicum), and brown rot (Phytophthora parasitica, Phytophthora citrophthora) .

Diseases of apple: blossom blight (Monilinia mail), canker (Valsa ceratosperma), powdery mildew (Podosphaera leucotricha), Alternaria leaf spot (Alternaria alternata apple pathotype), scab (Venturia inaequalis), powdery mildew, bitter rot (Colletotrichum acutatum), crown rot (Phytophtora cactorum), blotch (Diplocarpon mali), and ring rot (Botryosphaeria berengeriana).

Diseases of pear: scab (Venturia nashicola, V. pinna), powdery mildew, black spot (Alternaria alternata Japanese pear pathotype), rust (Gymnosporangium haraeanum), and phytophthora fruit rot (Phytophtora cactorum).

Diseases of peach: brown rot (Monilinia fructicola), powdery mildew, scab (Cladosporium carpophiium), and phomopsis rot (Phomopsis sp.).

Diseases of grape: anthracnose (Elsinoe ampelina), ripe rot (Glomerella cingulata), powdery mildew (Uncinula necator), rust (Phakopsora ampelopsidis), black rot (Guignardia bidwellii), botrytis, and downy mildew (Plasmopara viticola).

Diseases of Japanese persimmon: anthracnose (Gloeosporium kaki), and leaf spot (Cercospora kaki, Mycosphaerella nawae).

Diseases of gourd: anthracnose (Colletotrichum lagenarium), powdery mildew (Sphaerotheca fuliginea), gummy stem blight (Mycosphaerella melonis), Fusarium wilt (Fusarium oxysporum), downy mildew (Pseudoperonospora cubensis), Phytophthora rot (Phytophthora sp.), and damping-off (Pythium sp.).

Diseases of tomato: early blight (Alternaria solani), leaf mold (Cladosporium fulvum), and late blight (Phytophthora infestans).

Diseases of eggplant: brown spot (Phomopsis vexans), and powdery mildew (Erysiphe cichoracearum) Diseases of cruciferous vegetables: Alternaria leaf spot (Alternaria japonica), white spot (Cercosporella brassicae), clubroot (Plasmodiophora brassicae), and downy mildew (Peronospora parasitica).
Diseases of onion: rust (Puccinia allii), and downy mildew (Peronospora destructor)

Diseases of soybean: purple seed stain (Cercospora kikuchii), sphaceloma scad (Elsinoe glycines), pod and stem blight (Diaporthe phaseolorurn var. sojae), septoria brown spot (Septoria glycines), frogeye leaf spot (Cercospora sojina), rust (Phakopsora pachyrhizi), Yellow rust, brown stem rot (Phytophthora sojae), and Rhizoctonia damping-off (Rhizoctonia solani).

Diseases of kidney bean: anthracnose (Colletotrichum lindemthianum). Diseases of peanut: leaf spot (Cercospora personata), brown leaf spot (Cercospora arachidicola) and southern blight (Sclerotium rolfsii).

Diseases of garden pea: powdery mildew (Erysiphe pisi), and root rot (Fusarium solani f. sp. pisi).

Diseases of potato: early blight (Alternaria solani), late blight (Phytophthora infestans), pink rot (Phytophthora erythroseptica), and powdery scab (Spongospora subterranean f. sp. subterranea).

Diseases of strawberry: powdery mildew (Sphaerotheca humuli), and anthracnose (Glomerella cingulata).

Diseases of tea: net blister blight (Exobasidium reticulatum), white scab (Elsinoe leticospila), gray blight (Pestalotiopsis sp.), and anthracnose (Colletotrichum these- sinensis).

Diseases of tobacco: brown spot (Alternaria longipes), powdery mildew (Erysiphe cichoracearum), anthracnose (Colletotrichum tabacum), downy mildew (Peronospora tabacina), and black shank (Phytophthora nicotianae).

Diseases of rapeseed: sclerotinia rot (Sclerotinia sclerotiorum), and Rhizoctonia damping-off (Rhizoctonia solani). Diseases of cotton: Rhizoctonia damping-off (Rhizoctonia solani).

Diseases of sugar beat: Cercospora leaf spot (Cercospora beticola), leaf blight (Thanatephorus cucumeris), Root rot (Thanatephorus cucumeris), and Aphanomyces root rot (Aphanomyces cochiioides).

Diseases of rose: black spot (Diplocarpon rosae), powdery mildew (Sphaerotheca pannosa), and downy mildew (Peronospora sparsa). Diseases of chrysanthemum and asteraceous plants: downy mildew (Bremia lactucae), leaf blight (Septoria chrysanthemi-indici), and white rust (Puccinia horiana).

Diseases of various groups: diseases caused by Pythium spp. (Pythium aphanidermatum, Pythium debarianum, Pythium graminicola, Pythium irregulare, Pythium ultimum), gray mold. (Botrytis cinerea), and Sclerotinia rot (Sclerotinia sclerotiorum).

Disease of Japanese radish: Alternaria leaf spot (Alternaria brassicicola).

Diseases of turfgrass: dollar spot (Sclerotinia homeocarpa), and brown patch and large patch (Rhizoctonia solani).

Disease of banana: Black sigatoka (Mycosphaerella fijiensis), Yellow sigatoka (Mycosphaerella musicola).

Disease of sunflower: downy mildew (Plasmopara halstedii).

Seed diseases or diseases in the early stages of the growth of various plants caused by Aspergillus spp., Penicillium spp., Fusarium spp., Gibberella spp., Tricoderma spp., Thielaviopsis spp., Rhizopus spp., Mucor spp., Corticium spp., Phoma spp., Rhizoctonia spp. and Diplodia spp.

Viral diseases of various plants mediated by Polymixa spp. or Olpidium spp. and so on.

The combinations and/or compositions of the present invention can be used in agricultural lands such as fields, paddy fields, lawns and orchards or in non-agricultural lands. The present invention may be used to control diseases in agricultural lands for cultivating the plants without any phytotoxicity to the plant.

Examples of the crops on which the present compositions may be used include but are not limited to corn, rice, wheat, barley, rye, oat, sorghum, cotton, soybean, peanut, buckwheat, beet, rapeseed, sunflower, sugar cane, tobacco, etc.; vegetables: solanaceous vegetables such as eggplant, tomato, pimento, pepper, potato, etc., cucurbit vegetables such as cucumber, pumpkin, zucchini, water melon, melon, squash, etc., cruciferous vegetables such as radish, white turnip, horseradish, kohlrabi, Chinese cabbage, cabbage, leaf mustard, broccoli, cauliflower, etc., asteraceous vegetables such as burdock, crown daisy, artichoke, lettuce, etc, liliaceous vegetables such as green onion, onion, garlic, and asparagus, ammiaceous vegetables such as carrot, parsley, celery, parsnip, etc., chenopodiaceous vegetables such as spinach, Swiss chard, etc., lamiaceous vegetables such as Perilla frutescens, mint, basil, etc, strawberry, sweet potato, Dioscorea japonica, colocasia, etc., flowers, foliage plants, turf grasses, fruits: pome fruits such apple, pear, quince, etc, stone fleshy fruits such as peach, plum, nectarine, Prunus mume, cherry fruit, apricot, prune, etc., citrus fruits such as orange, lemon, rime, grapefruit, etc., nuts such as chestnuts, walnuts, hazelnuts, almond, pistachio, cashew nuts, macadamia nuts, etc. berries such as blueberry, cranberry, blackberry, raspberry, etc., grape, kaki fruit, olive, plum, banana, coffee, date palm, coconuts, etc., trees other than fruit trees: tea, mulberry, flowering plant, trees such as ash, birch, dogwood, Eucalyptus, Ginkgo biloba, lilac, maple, Quercus, poplar, Judas tree, Liquidambar formosana, plane tree, zelkova, Japanese arborvitae, fir wood, hemlock, juniper, Pinus, Picea, and Taxus cuspidate, etc.

In an embodiment, the combination of the present invention may be admixed in ratio of (1-80): (1-80).

In an embodiment, the total amount of benzovindiflupyr in the composition may typically be in the range of 0.1 to 99% by weight, preferably 0.2 to 90% by weight. The total amount of phenamacril in the composition may be in the range of 0.1 to 99% by weight. Alternately, the total amount of benzamacril in the composition may be in the range of 0.1 to 99% by weight of the composition.

In an embodiment, the constituents of the combination of the present invention may be tank mixed and sprayed at the locus of the infection, or may be alternatively be mixed with surfactants and then sprayed.

In an embodiment, the constituents of the combination of the present invention may be used for foliar application, ground or applications to plant propagation materials.

In an embodiment, the combinations of the present invention may typically be produced by mixing the actives in the composition with an inert carrier, and adding surfactants and other adjuvants and carriers as needed and formulated into solid, or liquid formulations, including but not limited to wettable powders, granules, dusts, soluble (liquid) concentrates, suspension concentrates, oil in water emulsion, water in oil emulsion, emulsifiable concentrates, capsule suspensions, ZC formulations, oil dispersions or other known formulation types. The combination may also be used for treatment of a plant propagation material such as seeds etc.

Examples of the solid carrier used in formulation include fine powders or granules such as minerals such as kaolin clay, attapulgite clay, bentonite, montmorillonite, acid white clay, pyrophyllite, talc, diatomaceous earth and calcite; natural organic materials such as corn rachis powder and walnut husk powder; synthetic organic materials such as urea; salts such as calcium carbonate and ammonium sulfate; synthetic inorganic materials such as synthetic hydrated silicon oxide; and as a liquid carrier, aromatic hydrocarbons such as xylene, alkylbenzene and methylnaphthalene; alcohols such as 2-propanol, ethyleneglycol, propylene glycol, and ethylene glycol monoethyl ether; ketones such as acetone, cyclohexanone and isophorone; vegetable oil such as soybean oil and cotton seed oil; petroleum aliphatic hydrocarbons, esters, dimethylsulfoxide, acetonitrile and water.

Examples of the surfactant include anionic surfactants such as alkyl sulfate ester salts, alkylaryl sulfonate salts, dialkyl sulfosuccinate salts, polyoxyethylene alkylaryl ether phosphate ester salts, lignosulfonate salts and naphthalene sulfonate formaldehyde polycondensates; and nonionic surfactants such as polyoxyethylene alkyl aryl ethers, polyoxyethylene alkylpolyoxypropylene block copolymers and sorbitan fatty acid esters and cationic surfactants such as alkyltrimethylammonium salts,

Examples of the other formulation auxiliary agents include water-soluble polymers such as polyvinyl alcohol and polyvinylpyrrolidone, polysaccharides such as Arabic gum, alginic acid and the salt thereof, CMC (carboxymethyl- cellulose) , Xanthan gum, inorganic materials such as aluminium magnesium silicate and alumina sol, preservatives, colouring agents and stabilization agents such as PAP (acid phosphate isopropyl) and BHT.

In an aspect, the present invention may provide a combination comprising:
(a) benxovindiflupyr;
(b) phenamacril or benzamacril or a combination thereof; and
(c) at least another agrochemical.

In an embodiment, said at least another agrochemical may be selected from a fungicide, insecticide, herbicide, biocide, plant growth regulator, plant activator, fertilizers and the like.

In an embodiment, said at least another agrochemical is a fungicide.

In a preferred embodiment, the fungicide may be a systemic or contact fungicide.

In an embodiment, the optional third fungicide may be selected from morpholine fungicides, triazole fungicides, acylamino acid fungicides, anilide fungicides, antibiotic fungicides, strobilurin fungicides, aromatic fungicides, arsenical fungicides, aryl phenyl ketone fungicides, benzimidazole fungicides, benzimidazole precursor fungicides, benzothiazole fungicides, bridged diphenyl fungicides, carbamate fungicides, conazole fungicides, copper fungicides, dicarboximide fungicides, dinitrophenol fungicides, dithiocarbamate fungicides, dithiolane fungicides, hydrazide fungicides, imidazole fungicides, inorganic fungicides, organophosphorus fungicides, organotin fungicides, oxathiin fungicides, oxazole fungicides, pyrimidine fungicides, pyrrole fungicides, quinoline fungicides, quinone fungicides, quinoxaline fungicides, thiadiazole fungicides, thiazole fungicides, thiazolidine fungicides, thiocarbamate fungicides, thiophene fungicides, triazine fungicides, triazolopyrimidine fungicides, urea fungicides, zinc fungicides, unclassified fungicides and mixtures thereof.

In an embodiment, the present invention may provide a combination comprising benzovindiflupyr; phenamacril or benzamacril or a combination thereof; and at least a triazole fungicide.

In an embodiment, the combination of the present invention may be benzovindiflupyr; phenamacril or benzamacril or a combination thereof; and at least a strobiliurin fungicide.

In an embodiment, the combination of the present invention may be benzovindiflupyr; phenamacril or benzamacril or a combination thereof; and atleast a benzimidazole fungicide.

In an embodiment, the combination of the present invention may be benzovindiflupyr; phenamacril or benzamacril or a combination thereof; and an inorganic fungicide.

Each of the aspect described herein may have one or more embodiments.

In each of these embodiments, apart from benzovindiflupyr and phenamacril or benzamacril or a combination thereof, the embodiments may include the preferred third fungicide according to the present invention.

Each of the embodiments described hereinafter may apply to one or all the aspects described elsewhere in the specification. These embodiments are intended to be read as being preferred features of one or all the aspects described hereinabove. Each of the embodiments described hereinafter applies to each of the aspects described hereinabove individually.

In an embodiment, the present invention provides preferred combinations, compositions and methods thereof. The embodiments described herein describe the preferred embodiments of all these possible combinations, compositions and methods of the invention.

In an embodiment, the third fungicide is a morpholine fungicide selected from aldimorph, benzamorph, carbamorph, dimethomorph, dodemorph, fenpropimorph, flumorph or tridemorph.

In an embodiment, the third fungicide is a triazole fungicide selected from amisulbrom, bitertanol, fluotrimazole, triazbutil, azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, huanjunzuo, imibenconazole, ipconazole, metconazole, myclobutanil, penconazole, propiconazole, prothioconazole, quinconazole, simeconazole, tebuconazole, tetraconazole, triadimefon, triadimenol, triticonazole, uniconazole, or uniconazole-P.

In an embodiment, the third fungicide is an acylamino acid fungicide selected from benalaxyl, benalaxyl-M, furalaxy!, metalaxyl, metalaxyl-M, pefurazoate, or valifenalate,
in an embodiment, the third fungicide is an anilide fungicide selected from benalaxyl, benalaxyl-M, bixafen, boscalid, carboxin, fenhexamid, fluxapyroxad, isotianil, metalaxyl, metalaxyl-M, metsulfovax, ofurace, oxadixyl, oxycarboxin, penflufen, pyracarbolid, pyraziflumid, sedaxane, thifluzamide, tiadinil, or vangard.

In an embodiment, the third fungicide is an antibiotic fungicide selected from aureofungin, blasticidin-S, cycloheximide, fenpicoxamid, griseofulvin, kasugamycin, moroxydine, natamycin, polyoxins, polyoxorim, streptomycin, or validamycin.

In an embodiment, the third fungicide is a strobilurin fungicide selected from fluoxastrobin, mandestrobin, pyribencarb, azoxystrobin, bifujunzhi, coumoxystrobin, enoxastrobin, flufenoxystrobin, jiaxiangjunzhi, picoxystrobin, pyraoxystrobin, pyraclostrobin, pyrametostrobin, triclopyricarb, dimoxystrobin, fenaminstrobin, metominostrobin, orysastrobin, kresoxim-methyl, or trifloxystrobin.

In an embodiment, the third fungicide is an aromatic fungicide selected from biphenyl, chlorodinitronaphthalenes, chloroneb, chlorothalonil, cresol, dicloran, fenjuntong, hexachlorobenzene, pentachlorophenol, quintozene, sodium pentachlorophenate, tecnazene, thiocyanatodinitrobenzenes, or trichlorotrinitrobenzenes.

In an embodiment, the third fungicide is an arsenical fungicide selected from asomate or urbacide.

In an embodiment, the third fungicide is an aryl phenyl ketone fungicide selected from metrafenone or pyrioferione.

In an embodiment, the third fungicide is a benzimidazole fungicide selected from elbendazole, benomyl, carbendazim, chlorfenazole, cypendazole, debacarb, fuberidazole, mecarbinzid, rabenzazole, or thiabendazole.

In an embodiment, the third fungicide is a benzimidazole precursor fungicide selected from furophanate, thiophanate or thiophanate-methyl.

In an embodiment, the third fungicide is a benzothiazole fungicide selected from bentaluron, benthiavalicarb, benthiazole, chlobenthiazone, dichlobentizox, or probenazole.

In an embodiment, the third fungicide is a bridged diphenyl fungicide selected from bithionol, dichlorophen, diphenylamine, hexachlorophene, and parinol.

In an embodiment, the third fungicide is a carbamate fungicide selected from benthiavalicarb, furophanate, iodocarb, iprovalicarb, picarbutrazox, propamocarb, pyribencarb, thiophanate, thiophanate-methyl, tolprocarb, albendazole, benornyl, carbendazim, cypendazole, debacarb, mecarbinzid, diethofencarb, pyraclostrobin, pyrametostrobin, and triclopyricarb.

In an embodiment, the third fungicide is a conazole fungicide selected from climbazole, clotrimazole, imazalil, oxpoconazole, prochloraz, trilfumizole, azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, ipfentrifluconazole, mefentrifluconazole, metconazole, myctobutanil, penconazole, propiconazole, prothioconazole, quinconazole, simeconazole, tebuconazole, tetraconazole, triadimefon, triadimenol, triticonazole, uniconazole and uniconazole-P.

In an embodiment, the third fungicide is a copper fungicide selected from acypetacs-copper, basic copper carbonate, basic copper sulfate, Bordeaux mixture, Burgundy mixture, Cheshunt mixture, copper acetate, copper hydroxide, copper naphthenate, copper oleate, copper oxychloride, copper silicate, copper sulfate, copper zinc chromate, cufraneb, cuprobam, cuprous oxide, mancopper, oxine-copper, saisentong, or thiodiazole-copper.

In an embodiment, the third fungicide is a dicarboximide fungicide selected from famoxadone, fluoroimide, chlozolinate, dichlozoline, iprodione, isovaledione, myclozolin, procymidone, vinclozolin, captafol, captan, ditalimfos, folpet or thiochlorfeophim.

In an embodiment, the third fungicide is a dinitrophenol fungicide selected from binapacryl, dinobuton, dinocap, dinocap-4, dinocap-6, meptyldinocap, dinocton, dinopenton, dinosulfon, dinoterbon or DNOC.

In an embodiment, the third fungicide is a dithiocarbamate fungicide selected from amobam, asomate, azithiram, carbamorph, cufraneb, cuprobam, disulfiram, ferbam, metam, nabam, tecoram, thiram, urbacide, ziram, dazomet, etem, milneb, mancopper, mancozeb, maneb, metiram, polycarbamate, propineb or zineb.

In an embodiment, the third fungicide is a dithiolane fungicide selected from isoprothiolane or saijunmao.

In an embodiment, the third fungicide is a hydrazide fungicide selected from benquinox or saijunmao.

In an embodiment, the third fungicide is an imidazole fungicide selected from cyazofamid, fenamidone, fenapanil, glyodin, iprodione, isovaledione, pefurazoate, triazoxide, climbazole, clotrimazole, imazalil, oxpoconazole, prochloraz or triflumizole.

In an embodiment, the third fungicide is an inorganic fungicide selected from potassium azide, potassium thiocyanate, sodium azide, sulfur, mercuric chloride, mercuric oxide, mercurous chloride, (3-ethoxypropyl)mercury bromide, ethylmercury acetate, ethylmercury bromide, ethylmercury chloride, ethylmercury 2,3-dihydroxypropyl mercaptide, ethylmercury phosphate, *N*-(ethylmercury)-*p-*toluenesulfonanilide, hydrargaphen, 2-methoxyethylmercury chloride, methylmercury benzoate, methylmercury dicyandiamide, methylmercury pentachlorophenoxide, 8-phenylmercurioxyquinoline, phenylmercuriurea, phenylmercury acetate, phenyl mercury chloride, phenylmercury derivative of pyrocatechol, phenylmercury nitrate, phenyl mercury salicylate, thiomersal, or tolylmercury acetate.

In an embodiment, the third fungicide is an organophosphorus fungicide selected from ampropylfos, ditalimfos, EBP, edifenphos, fosetyl, hexylthiofos, inezin, iprober,fos, izopamfos, kejunlin, phosdiphen, pyrazophos, tolclofos-methyl or triamiphos.

In an embodiment, the third fungicide is an organotin fungicide selected from decafentin, fentin or tributyltin oxide.

In an embodiment, the third fungicide is an oxathiin fungicide selected from carboxin or oxycarboxin.

in an embodiment, the third fungicide is an oxazole fungicide selected from chlozolinate, dichlozoline, drazoxolon, famoxadone, hymexazol, metazoxolon, myclozolin, oxadixyl, oxathiapiprolin, pyrisoxazole or vinclozolin,

In an embodiment, the third fungicide is a pyrimidine fungicide selected from bupirimate, diflumetorim, dimethirimol, ethirimol, fenarimol, ferimzone, nuarimol, triarimol, cyprodinil, mepanipyrim or pyrimethanii.

In an embodiment, the third fungicide is a pyrrole fungicide selected from dimetachlone, fenpiclonil, fludioxonil or fluoroimide.

In an embodiment, the third fungicide is a quinoline fungicide selected from ethoxyquin, halacrinate, 8-hydroxyquinoline sulfate, ipflufenoquin, quinacetol, quinofumelin, quinoxyfen or tebufloquin.

In an embodiment, the third fungicide is a quinone fungicide selected from chloranil, dichlone or diathianon.

In an embodiment, the third fungicide is a quinoxaline fungicide selected from chinomethionat, chlorquinox or thioquinox.

In an embodiment, the third fungicide is a thiadiazole fungicide selected from etridiazole, saisentong, thiodiazole-copper, or zinc thiazole,

In an embodiment, the third fungicide is a thiazole fungicide selected from dichlobentiazox, ethaboxam, isotianil, metsulfovax, octhilinone, oxathiapiprolin, thiabendazole or thifluzamide.

In an embodiment, the third fungicide is a thiazolidine fungicide selected from flutianil or thiadifluor.

In an embodiment, the third fungicide is a thiocarbamate fungicide selected from methasulfocarb or prothiocarb.

In an embodiment, the third fungicide is a thiophene fungicide selected from ethaboxam, isofetamid or silthiofam.

In an embodiment, the third fungicide is anilazine.

In an embodiment, the third fungicide is a triazolopyrimidine fungicide selected from ametoctradin.

In an embodiment, the third fungicide is a urea fungicide selected from bentaluron, pencycuron, or quinazamid.

In an embodiment, the third fungicide is a zinc fungicide selected from acypetacs-zinc, copper zinc chromate, cufraneb, mancozeb, metiram, polycarbamate, polyoxorim-zinc, propineb, zinc naphthenate, zinc thiazole, zinc trichlorophenate, zineb, or ziram.

In an embodiment, the third fungicide is an unclassified fungicide selected from acibenzolar, acypetacs, allyl alcohol, benzalkonium chloride, bethoxazin, bromothalonil, chitosan, chloropicrin, DBCP, dehydroacetic acid, diclomezine, diethyl pyrocarbonate, dipymetitrone, ethylicin, fenaminosulf, fenitropan, feripropidin, formaldehyde, furfural, hexachlorobutadiene, methyl isothiocyanate, nitrostyrene, nitrothal-isopropyl, OCH, pentachlorophenyl laurate, 2-phenylphenol, phthalide, piperalin, propamidine, proquinazid, pyroquilon, sodium o-phenylphenoxide, spiroxamine, sultropen, thicyofen or tricyclazole.

In an aspect, the present invention may provide compositions comprising:
(a) benzovindiflupyr; and
(b) phenamacril or benzamacril or a combination thereof,
in an aspect, the present invention may provide compositions comprising:
(a) benzovindiflupyr;
(b) phenamacril or benzamacril or a combination thereof and
(c) at least another agrochemical active ingredient.

The third active ingredient according to the present embodiment may be selected as defined in the previous aspect of the invention.

In an embodiment, said at least another agrochemical may be selected from a fungicide, insecticide, herbicide, biocide, plant growth regulator, plant activator, fertilizers and the like.

In an embodiment, said at least another agrochemical is a fungicide.

In a preferred embodiment, the fungicide may be a systemic or contact fungicide.

In an embodiment, the optional third fungicide may be selected from morpholine fungicides, triazole fungicides, acylamino acid fungicides, anilide fungicides, antibiotic fungicides, strobilurin fungicides, aromatic fungicides, arsenical fungicides, aryl phenyl ketone fungicides, benzimidazole fungicides, benzimidazole precursor fungicides, benzothiazole fungicides, bridged diphenyl fungicides, carbamate fungicides, conazole fungicides, copper fungicides, dicarboximide fungicides, dinitrophenol fungicides, dithiocarbamate fungicides, dithiolane fungicides, hydrazide fungicides, imidazole fungicides, inorganic fungicides, organophosphorus fungicides, organotin fungicides, oxathiin fungicides, oxazole fungicides, pyrimidine fungicides, pyrrole fungicides, quinoline fungicides, quinone fungicides, quinoxaline fungicides, thiadiazole fungicides, thiazole fungicides, thiazolidine fungicides, thiocarbamate fungicides, thiophene fungicides, triazine fungicides, triazolopyrimidine fungicides, urea fungicides, zinc fungicides, unclassified fungicides and mixtures thereof.

In an embodiment, the present invention may provide a composition comprising benzovindiflupyr; phenamacril or benzamacril or a combination thereof; and at least a triazole fungicide.

In an embodiment, the present invention may provide a composition comprising benzovindiflupyr; phenamacril or benzamacril or a combination thereof; and at least a strobiliurin fungicide.

In an embodiment, the present invention may provide a composition comprising benzovindiflupyr; phenamacril or benzamacril or a combination thereof; and atleast a benzimidazole fungicide.

In an aspect, the present invention may provide a method of controlling fungal diseases, said method comprising applying to the locus an agrochemically acceptable amount of a combination or a composition comprising:
(a) benzovindiflupyr; and
(b) phenamacril or benzamacril or a combination thereof.

As stated earlier, prior art reports significant development of resistance to phenamacril, particularly in crops such as wheat. The present invention therefore, aims to solve this problem.

Thus, in an aspect, the present invention may provide a method of resistance management comprising application at the locus of the infection a combination comprising benzovindiflupyr and phenamacril or benzamacril or a combination thereof.

In an embodiment, the present invention may provide a method of preventing resistance in fungi, said method comprising applying to the locus of the plant, a combination comprising benzovindiflupyr and phenamacril or benzamacril or a combination thereof.

The combinations of the present invention may be sold as a pre-mix composition or a kit of parts such that individual actives may be mixed before spraying. Alternatively, the kit of parts may contain benzovindiflupyr and phenamacril or benzamacril or a combination thereof pre-mixed and the optional third active may be admixed with an adjuvant such that the two components may be tank mixed before spraying.

Therefore, in an aspect, the present invention provides a kit comprising a fungicidal combination comprising benzovindiflupyr; and phenamacril or benzamacril or a combination thereof.

In another aspect, the present invention provides a kit comprising a fungicidal combination comprising benzovindiflupyr; phenamacril or benzamacril or a combination thereof; and a third fungicide selected from morpholine fungicides. triazole fungicides, acylamino acid fungicides, anilide fungicides, antibiotic fungicides, strobilurin fungicides, aromatic fungicides, arsenical fungicides, aryl phenyl ketone fungicides, benzimidazole fungicides, benzimidazole precursor fungicides, benzothiazole fungicides, bridged diphenyl fungicides, carbamate fungicides, conazole fungicides, copper fungicides, dicarboximide fungicides, dinitrophenol fungicides, dithiocarbamate fungicides, dithiolane fungicides, hydrazide fungicides, imidazole fungicides, inorganic fungicides, organophosphorus fungicides, organotin fungicides, oxathiin fungicides, oxazole fungicides, pyrimidine fungicides, pyrrole fungicides, quinoline fungicides, quinone fungicides, quinoxaline fungicides, thiadiazole fungicides, thiazole fungicides, thiazolidine fungicides, thiocarbamate fungicides, thiophene fungicides, triazine fungicides, triazolopyrimidine fungicides, urea fungicides, zinc fungicides, unclassified fungicides and mixtures thereof.

In another aspect, the present invention provides a kit comprising a fungicidal combination comprising benzovindiflupyr; phenamacril or benzamacril or a combination thereof; and at least a triazole fungicide.

In another aspect, the present invention provides a kit comprising a fungicidal combination comprising benzovindiflupyr; phenamacril or benzamacril or a combination thereof; and at least a strobiliurin fungicide.

In another aspect, the present invention provides a kit comprising a fungicidal combination comprising benzovindiflupyr; phenamacril or benzamacril or a combination thereof; and atleast a benzimidazole fungicide.

The composition of the present invention maybe applied simultaneously as a tank mix or a formulation or may be applied sequentially. The application may be made to the soil before emergence of the plants, either pre-planting or post-planting. The application may be made as a foliar spray at different timings during crop development, with either one or two applications early or late post-emergence.

The compositions according to the invention can be applied before or after infection of the useful plants or the propagation material thereof by the fungi.

The combination of a benzovindiflupyr with phenamacril or benzamacril or a combination thereof, greatly improved the disease control as well as improved yield and demonstrated a synergistic effect. The lower the mixture performance in the disease control, the greater the additional benefit of the present invention.

### Examples:

The expected fungicidal action for a given combination of two active compounds can be calculated as follows, according to S.R. Colby ("Calculating Synergistic and Antagonistic Responses of Herbicide Combinations", Weeds 1967, 15, 20-22):
If X is the efficacy when employing active compound A at an application rate of M g/ha, = Y is the efficacy when employing active compound 8 at an application rate of 71 g/ha and is the efficacy when employing active compounds, A and B at application rates of m and n g/ha, X x Y
then E=X+Y

Here, the efficacy is determined in %, 0% means an efficacy which corresponds to that of the control, whereas an efficacy of 100% means that no infection is observed.

If the observed fungicidal action exceeds the calculated value, the action of the combination is superadditive, i.e. a synergistic effect is present, In this case, the actually observed efficacy must exceed the value calculated using the above formula for the expected efficacy (E).

Field trials of the combination according to the present invention were conducted at various sites and the performance of the combination was evaluated against wheat head blight disease. The experiments were carried out at several locations and the experiments were designed according to randomized block design. Yield and vigor of the and the plant was also tested. The treated plot size was 12 feet by 30 feet. A single randomized control plot was included in each block. About 15 gallons per acre of the tested formulations were applied. The data collection was based upon standard collection procedures prevalent. The actives were mixed at various concentrations to evaluate synergy.

### Trial 1:

Benzovindiflupyr+ Phenamacril was tested to control of *Fusarium graminearum* in wheat at 3DAA. The results were found as follows:

| Dose | | % disease control of *Fusarium graminearum* in wheat at 3DAA | |
|---|---|---|---|
| Treatment | Dosage (mL/Ha) | Expected | Actual |
| Untreated check | - | - | 0.00 |
| Benzovindiflupyr | 200 | - | 27 |
| | | | |
| Phenamacril | 1500 | - | 83.5 |
| Benzovindiflupyr+ Phenamacril | 200 + 1500 | 87.95 | 91.8 |
| Observed - Expected defoliation efficacy | | 3.85 | |

The combination of benzovindiflupyr and phenamacri! was found to be synergistic. There was no phytotoxicity observed.

### Trail 2: Benzovindiflupyr+ Phenamacril was tested to control of Fusarium graminearum in wheat at 7DAA. The results were found as follows:

| Dose | | % disease control of *Fusarium graminearum* in wheat at 7DAA | |
|---|---|---|---|
| Treatment | Dosage (mL/Ha) | Expected | Actual |
| Untreated check | - | - | 0.00 |
| Benzovindiflupyr | 200 | - | 27 |
| Phenamacril | 1500 | - | 83.5 |
| Benzovindiflupyr+ Phenamacril | 200 + 1500 | 87.25 | 92 |
| Observed - Expected defoliation efficacy | | 4.77 | |

The combination of benzovindiflupyr and phenamacril was found to be synergistic. There was no phytotoxicity observed.

### Trial 3: Benzovindiflupyr+ Phenamacril was tested to control of Fusarium graminearum in wheat at 3DAA. The results were found as follows:

| Dose | | % disease control of *Fusarium graminearum* in wheat at 3DAA | |
|---|---|---|---|
| Treatment | Dosage (mL/Ha) | Expected | Actual |
| Untreated check | - | - | 0.00 |
| Benzovindiflupyr | 200 | - | 27 |
| Phenamacril | 1500 | - | 83.5 |
| Benzovindiflupyr+ Phenamacril | 150+1250 | 87.25 | 90 |
| Observed - Expected defoliation efficacy | | 2.77 | |

The combination of benzovindiflupyr and phenamacril was found to be synergistic. There was no phytotoxicity observed.

### Trial 4: Benzovindiflupyr+ Phenamacril was tested to control of Fusarium graminearum in wheat at 3DAA. The results were found as follows:

| Dose | | % disease control of *Fusarium graminearum* in wheat at 7DAA | |
|---|---|---|---|
| Treatment | Dosage (mL/Ha) | Expected | Actual |
| Untreated check | - | - | 0.00 |
| Benzovindiflupyr | 200 | - | 27 |
| Phenamacril | 1500 | - | 83.5 |
| Benzovindiflupyr+ Phenamacril | 150+1250 | 87.95 | 91 |
| Observed - Expected defoliation efficacy | | 3.045 | |

The combination of benzovindiflupyr and phenamacril was found to be synergistic. There was no phytotoxicity observed.

The combination of a benzovindiflupyr with phenamacril or benzamacril or a combination thereof, greatly improved the disease control as well as improved yield and demonstrated a synergistic effect.

## Claims

1. A fungicidal combination comprising:
a) benzovindiflupyr; and
b) phenamacril and/or benzamacril.

2. The combination as claimed in claim 1 comprising a third fungicide.

3. The combination as claimed in claim 2, wherein the third fungicide is morpholine fungicides, triazole fungicides, acylamino acid fungicides, anilide fungicides, antibiotic fungicides, strobilurin fungicides, aromatic fungicides, arsenical fungicides, aryl phenyl ketone fungicides, benzimidazole fungicides, benzimidazole precursor fungicides, benzothiazole fungicides, bridged diphenyl fungicides, carbamate fungicides, conazole fungicides, copper fungicides, dicarboximide fungicides, dinitrophenol fungicides, dithiocarbamate fungicides, dithiolane fungicides, hydrazide fungicides, imidazole fungicides, inorganic fungicides, organophosphorus fungicides, organotin fungicides, oxathiin fungicides, oxazole fungicides, pyrimidine fungicides, pyrrole fungicides, quinoline fungicides, quinone fungicides, quinoxaline fungicides, thiadiazole fungicides, thiazole fungicides, thiazolidine fungicides, thiocarbamate fungicides, thiophene fungicides, triazine fungicides, triazolopyrimidine fungicides, urea fungicides, zinc fungicides, unclassified fungicides and mixtures thereof.

4. The combination as claimed in any one of the preceding claims comprising benzovindiflupyr; phenamacril or benzamacril or a combination thereof; and at least a triazole fungicide.

5. The combination as claimed in any one of the preceding claims comprising benzovindiflupyr; phenamacril or benzamacril or a combination thereof; and at least a strobiliurin fungicide.

6. The combination as claimed in any one of the preceding claims comprising benzovindiflupyr; phenamacril or benzamacril or a combination thereof; and at least a benzimidazole fungicide.

7. The combination as claimed in any one of the preceding claims comprising benzovindiflupyr; phenamacril or benzamacril or a combination thereof; and an inorganic fungicide.

8. The combination as claimed in any one of claims 2-7, wherein the third fungicide:
is a morpholine fungicide selected from aldimorph, benzamorph, carbamorph, dimethomorph, dodemorph, fenpropimorph, flumorph or tridemorph; or
is a triazole fungicide selected from amisulbrom, bitertanol, fluotrimazole, triazbutil, azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, huanjunzuo, imibenconazole, ipconazole, metconazole, myclobutanil, penconazole, propiconazole, prothioconazole, quinconazole, simeconazole, tebuconazole, tetraconazole, triadimefon, triadimenol, triticonazole, uniconazole, or uniconazole-P; or
is an acylamino acid fungicide selected from benalaxyl, benalaxyl-M, furalaxyl, metalaxyl, metalaxyl-M, pefurazoate, or valifenalate; or
is an anilide fungicide selected from benalaxyl, benalaxyl-M, bixafen, boscalid, carboxin, fenhexamid, fluxapyroxad, isotianil, metalaxyl, metalaxyl-M, metsulfovax, ofurace, oxadixyl, oxycarboxin, penflufen, pyracarbolid, pyraziflumid, sedaxane, thifluzamide, tiadinil, or vangard; or
is an antibiotic fungicide selected from aureofungin, blasticidin-S, cycloheximide, fenpicoxamid, griseofulvin, kasugamycin, moroxydine, natamycin, polyoxins, polyoxorim, streptomycin, or validamycin; or
is a strobilurin fungicide selected from fluoxastrobin, mandestrobin, pyribencarb, azoxystrobin, bifujunzhi, coumoxystrobin, enoxastrobin, flufenoxystrobin, jiaxiangjunzhi, picoxystrobin, pyraoxystrobin, pyraclostrobin, pyrametostrobin, triclopyricarb, dimoxystrobin, fenaminstrobin, metominostrobin, orysastrobin, kresoxim-methyl, or trifloxystrobin; or
is an aromatic fungicide selected from biphenyl, chlorodinitronaphthalenes, chloroneb, chlorothalonil, cresol, dicloran, fenjuntong, hexachlorobenzene, pentachlorophenol, quintozene, sodium pentachlorophenate, tecnazene, thiocyanatodinitrobenzenes, or trichlorotrinitrobenzenes; or
is an arsenical fungicide selected from asomate or urbacide; or
is an aryl phenyl ketone fungicide selected from metrafenone or pyriofenone; or
is a benzimidazole fungicide selected from elbendazole, benomyl, carbendazim, chlorfenazole, cypendazole, debacarb, fuberidazole, mecarbinzid, rabenzazole, or thiabendazole; or
is a benzimidazole precursor fungicide selected from furophanate, thiophanate or thiophanate-methyl; or
is a benzothiazole fungicide selected from bentaluron, benthiavalicarb, benthiazole, chlobenthiazone, dichlobentizox, or probenazole; or
is a bridged diphenyl fungicide selected from bithionol, dichlorophen, diphenylamine, hexachlorophene, and parinol; or
is a carbamate fungicide selected from benthiavalicarb, furophanate, iodocarb, iprovalicarb, picarbutrazox, propamocarb, pyribencarb, thiophanate, thiophanate-methyl, tolprocarb, albendazole, benomyl, carbendazim, cypendazole, debacarb, mecarbinzid, diethofencarb, pyraclostrobin, pyrametostrobin, and triclopyricarb; or
is a conazole fungicide selected from climbazole, clotrimazole, imazalil, oxpoconazole, prochloraz, trilfumizole, azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, ipfentrifluconazole, mefentrifluconazole, metconazole, myclobutanil, penconazole, propiconazole, prothioconazole, quinconazole, simeconazole, tebuconazole, tetraconazole, triadimefon, triadimenol, triticonazole, uniconazole and uniconazole-P; or
is a copper fungicide selected from acypetacs-copper, basic copper carbonate, basic copper sulfate, Bordeaux mixture, Burgundy mixture, Cheshunt mixture, copper acetate, copper hydroxide, copper naphthenate, copper oleate, copper oxychloride, copper silicate, copper sulfate, copper zinc chromate, cufraneb, cuprobam, cuprous oxide, mancopper, oxine-copper, saisentong, or thiodiazole-copper; or
is a dicarboximide fungicide selected from famoxadone, fluoroimide, chlozolinate, dichlozoline, iprodione, isovaledione, myclozolin, procymidone, vinclozolin, captafol, captan, ditalimfos, folpet or thiochlorfenphim; or
is a dinitrophenol fungicide selected from binapacryl, dinobuton, dinocap, dinocap-4, dinocap-6, meptyldinocap, dinocton, dinopenton, dinosulfon, dinoterbon or DNOC; or
is a dithiocarbamate fungicide selected from amobam, asomate, azithiram, carbamorph, cufraneb, cuprobam, disulfiram, ferbam, metam, nabam, tecoram, thiram, urbacide, ziram, dazomet, etem, milneb, mancopper, mancozeb, maneb, metiram, polycarbamate, propineb or zineb; or
is a dithiolane fungicide selected from isoprothiolane or saijunmao; or
is a hydrazide fungicide selected from benquinox or saijunmao; or
is an imidazole fungicide selected from cyazofamid, fenamidone, fenapanil, glyodin, iprodione, isovaledione, pefurazoate, triazoxide, climbazole, clotrimazole, imazalil, oxpoconazole, prochloraz or triflumizole; or
is an inorganic fungicide selected from potassium azide, potassium thiocyanate, sodium azide, sulfur, mercuric chloride, mercuric oxide, mercurous chloride, (3-ethoxypropyl)mercury bromide, ethylmercury acetate, ethylmercury bromide, ethylmercury chloride, ethylmercury 2,3-dihydroxypropyl mercaptide, ethylmercury phosphate, N-(ethylmercury)-p-toluenesulfonanilide, hydrargaphen, 2-methoxyethylmercury chloride, methylmercury benzoate, methylmercury dicyandiamide, methylmercury pentachlorophenoxide, 8-phenylmercurioxyquinoline, phenylmercuriurea, phenylmercury acetate, phenyl mercury chloride, phenyl mercury derivative of pyrocatechol, phenylmercury nitrate, phenylmercury salicylate, thiomersal, or tolylmercury acetate; or
is an organophosphorus fungicide selected from ampropylfos, ditalimfos, EBP, edifenphos, fosetyl, hexylthiofos, inezin, iprobenfos, izopamfos, kejunlin, phosdiphen, pyrazophos, tolclofos-methyl or triamiphos; or
is an organotin fungicide selected from decafentin, fentin or tributyltin oxide; or
is an oxathiin fungicide selected from carboxin or oxycarboxin; or
is an oxazole fungicide selected from chlozolinate, dichlozoline, drazoxolon, famoxadone, hymexazol, metazoxolon, myclozolin, oxadixyl, oxathiapiprolin, pyrisoxazole or vinclozolin; or
is a pyrimidine fungicide selected from bupirimate, diflumetorim, dimethirimol, ethirimol, fenarimol, ferimzone, nuarimol, triarimol, cyprodinil, mepanipyrim or pyrimethanil; or
is a pyrrole fungicide selected from dimetachlone, fenpiclonil, fludioxonil or fluoroimide; or
is a quinoline fungicide selected from ethoxyquin, halacrinate, 8-hydroxyquinoline sulfate, ipflufenoquin, quinacetol, quinofumelin, quinoxyfen or tebufloquin; or
is a quinone fungicide selected from chloranil, dichlone or diathianon; or
is a quinoxaline fungicide selected from chinomethionat, chlorquinox or thioquinox; or
is a thiadiazole fungicide selected from etridiazole, saisentong, thiodiazole-copper, or zinc thiazole; or
is a thiazole fungicide selected from dichlobentiazox, ethaboxam, isotianil, metsulfovax, octhilinone, oxathiapiprolin, thiabendazole or thifluzamide; or
is a thiazolidine fungicide selected from flutianil or thiadifluor; or
is a thiocarbamate fungicide selected from methasulfocarb or prothiocarb; or
is a thiophene fungicide selected from ethaboxam, isofetamid or silthiofam; or
is anilazine; or
is a triazolopyrimidine fungicide selected from ametoctradin; or
is a urea fungicide selected from bentaluron, pencycuron, or quinazamid; or
is a zinc fungicide selected from acypetacs-zinc, copper zinc chromate, cufraneb, mancozeb, metiram, polycarbamate, polyoxorim-zinc, propineb, zinc naphthenate, zinc thiazole, zinc trichlorophenate, zineb, or ziram; or
is an unclassified fungicide selected from acibenzolar, acypetacs, allyl alcohol, benzalkonium chloride, bethoxazin, bromothalonil, chitosan, chloropicrin, DBCP, dehydroacetic acid, diclomezine, diethyl pyrocarbonate, dipymetitrone, ethylicin, fenaminosulf, fenitropan, fenpropidin, formaldehyde, furfural, hexachlorobutadiene, methyl isothiocyanate, nitrostyrene, nitrothal-isopropyl, OCH, pentachlorophenyl laurate, 2-phenylphenol, phthalide, piperalin, propamidine, proquinazid, pyroquilon, sodium o-phenylphenoxide, spiroxamine, sultropen, thicyofen or tricyclazole.

9. A composition comprising a combination as claimed in claims 1 - 8.

10. A method of controlling fungal diseases in plants, said method comprising applying to the locus a combination as claimed in claims 1 - 8 or a composition as claimed in claim 9.

11. A method of resistance management in crops comprising application to said crops, a combination as claimed in claims 1 - 8 or a composition claimed in claim 9.

12. A method of preventing resistance in fungi, said method comprising applying to the locus of the plant, a combination as claimed in claims 1 - 8 or a composition as claimed in claim 9.

13. A kit comprising a fungicidal combination as claimed in claims 1 - 8 or a composition as claimed in claim 9.

14. A kit as claimed in claim 13 comprising instructions for use of said combinations as claimed in claims 1 - 8 against wheat head blight.

15. A kit as claimed in claim 13 or claim 14 comprising instructions for carrying out a method of resistance management and/or a method of controlling/preventing fungal diseases at a locus using the combination as claimed in claims 1 - 8 or using a composition as claimed in claim 9.

## Patentansprüche

1. Fungizide Kombination, umfassend:
a) Benzovindiflupyr; und
b) Phenamacril und/oder Benzamacril.

2. Kombination nach Anspruch 1, die ein drittes Fungizid umfasst.

3. Kombination nach Anspruch 2, wobei das dritte Fungizid Folgendes ist: Morpholinfungizide, Triazolfungizide, Acylaminosäurefungizide, Anilidfungizide, antibiotische Fungizide, Strobilurinfungizide, aromatische Fungizide, arsenhaltige Fungizide, Arylphenylketonfungizide, Benzimidazolfungizide, Benzimidazol-Vorläufer-Fungizide, Benzothiazol-Fungizide, verbrückte Diphenyl-Fungizide, Carbamat-Fungizide, Conazol-Fungizide, Kupfer-Fungizide, Dicarboximid-Fungizide, Dinitrophenol-Fungizide, Dithiocarbamatfungizide, Dithiolanfungizide, Hydrazidfungizide, Imidazolfungizide, anorganische Fungizide, Organophosphorfungizide, zinnorganische Fungizide, Oxathiinfungizide, Oxazolfungizide, Pyrimidinfungizide, Pyrrolfungizide, Chinolinfungizide, Chinonfungizide, Chinoxalinfungizide, Thiadiazolfungizide, Thiazolfungizide, Thiazolidinfungizide, Thiocarbamatfungizide, Thiophenfungizide, Triazinfungizide, Triazolopyrimidinfungizide, Hamstofffungizide, Zinkfungizide, nicht klassifizierte Fungizide und Gemische davon.

4. Kombination nach einem der vorhergehenden Ansprüche, umfassend Benzovindiflupyr; Phenamacril oder Benzamacril oder eine Kombination davon; und mindestens ein Triazolfungizid.

5. Kombination nach einem der vorhergehenden Ansprüche, umfassend Benzovindiflupyr; Phenamacril oder Benzamacril oder eine Kombination davon; und mindestens ein Strobiliurinfungizid.

6. Kombination nach einem der vorhergehenden Ansprüche, umfassend Benzovindiflupyr; Phenamacril oder Benzamacril oder eine Kombination davon; und mindestens ein Benzimidazolfungizid.

7. Kombination nach einem der vorhergehenden Ansprüche, umfassend Benzovindiflupyr; Phenamacril oder Benzamacril oder eine Kombination davon; und mindestens ein anorganisches Fungizid.

8. Kombination nach einem der Ansprüche 2-7, wobei das dritte Fungizid:
ein Morpholinfungizid ist, ausgewählt aus Aldimorph, Benzamorph, Carbamorph, Dimethomorph, Dodemorph, Fenpropimorph, Flumorph oder Tridemorph; oder
ein Triazolfungizid ist, ausgewählt aus Amisulbrom, Bitertanol, Fluotrimazol, Triazbutil, Azaconazol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Huanjunzuo, Imibenconazol, Ipconazol, Metconazol, Myclobutanil, Penconazol, Propiconazol, Prothioconazol, Quinconazol, Simeconazol, Tebuconazol, Tetraconazol, Triadimefon, Triadimenol, Triticonazol, Uniconazol oder Uniconazol P; oder
ein Acylaminosäurefungizid ist, ausgewählt aus Benalaxyl, Benalaxyl-M, Furalaxyl, Metalaxyl, Metalaxyl-M, Pefurazoat oder Valifenalat; oder
ein Anilidfungizid ist, ausgewählt aus Benalaxyl, Benalaxyl-M, Bixafen, Boscalid, Carboxin, Fenhexamid, Fluxapyroxad, Isotianil, Metalaxyl, Metalaxyl-M, Metsulfovax, Ofurace, Oxadixyl, Oxycarboxin, Penflufen, Pyracarbolid, Pyraziflumid, Sedaxan, Thifluzamid, Tiadinil oder Vangard; oder
ein antibiotisches Fungizid ist, ausgewählt aus Aureofungin, Blasticidin-S, Cycloheximid, Fenpicoxamid, Griseofulvin, Kasugamycin, Moroxydin, Natamycin, Polyoxinen, Polyoxorim, Streptomycin oder Validamycin; oder
ein Strobilurinfungizid ist, ausgewählt aus Fluoxastrobin, Mandestrobin, Pyribencarb, Azoxystrobin, Bifujunzhi, Coumoxystrobin, Enoxastrobin, Flufenoxystrobin, Jiaxiangjunzhi, Picoxystrobin, Pyraoxystrobin, Pyraclostrobin, Pyrametostrobin, Triclopyricarb, Dimoxystrobin, Fenaminstrobin, Metominostrobin, Orysastrobin, Kresoxim-Methyl oder Trifloxystrobin; oder
ein aromatisches Fungizid ist, ausgewählt aus Biphenyl, Chlordinitronaphthalinen, Chloroneb, Chlorthalonil, Kresol, Dicloran, Fenjuntong, Hexachlorbenzol, Pentachlorphenol, Quintozen, Natriumpentachlorphenat, Tecnazen, Thiocyanatodinitrobenzolen oder Trichlortrinitrobenzolen; oder
ein arsenhaltiges Fungizid ist, ausgewählt aus Asomat oder Urbazid; oder
ein Arylphenylketon-Fungizid ist, ausgewählt aus Metrafenon oder Pyriofenon; oder
ein Benzimidazol-Fungizid ist, ausgewählt aus Elbendazol, Benomyl, Carbendazim, Chlorfenazol, Cypendazol, Debacarb, Fuberidazol, Mecarbinzid, Rabenzazol oder Thiabendazol; oder
ein Benzimidazol-Vorläuferfungizid ist, ausgewählt aus Furophanat, Thiophanat oder Thiophanatmethyl, oder
ein Benzothiazol-Fungizid ist, ausgewählt aus Bentaluron, Benthiavalicarb, Benthiazol, Chlobenthiazon, Dichlobentizox oder Probenazol; oder
ein verbrücktes Diphenylfungizid ist, ausgewählt aus Bithionol, Dichlorophen, Diphenylamin, Hexachlorophen und Parinol; oder
ein Carbamatfungizid ist, ausgewählt aus Benthiavalicarb, Furophanat, Iodocarb, Iprovalicarb, Picarbutrazox, Propamocarb, Pyribencarb, Thiophanat, Thiophanatmethyl, Tolprocarb, Albendazol, Benomyl, Carbendazim, Cypendazol, Debacarb, Mecarbinzid, Diethofencarb, Pyraclostrobin, Pyrametostrobin und Triclopyricarb, oder
ein Conazolfungizid ist, ausgewählt aus Climbazol, Clotrimazol, Imazalil, Oxpoconazol, Prochloraz, Trilfumizol, Azaconazol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Ipfentrifluconazol, Mefentrifluconazol, Metconazol, Myclobutanil, Penconazol, Propiconazol, Prothioconazol, Chinconazol, Simeconazol, Tebuconazol, Tetraconazol, Triadimefon, Triadimenol, Triticonazol, Uniconazol und Uniconazol-P; oder
ein Kupferfungizid ist, ausgewählt aus Acypetacs-Kupfer, basischem Kupfercarbonat, basischem Kupfersulfat, Bordeaux-Gemisch, Burgunder-Gemisch, Cheshunt-Gemisch, Kupferacetat, Kupferhydroxid, Kupfernaphthenat, Kupferoleat, Kupferoxychlorid, Kupfersilikat, Kupfersulfat, Kupferzinkchromat, Cufraneb, Cuprobam, Kupferoxid, Man-Kupfer, Oxin-Kupfer, Saisentong oder Thiodiazol-Kupfer; oder
ein Dicarboximid-Fungizid ist, ausgewählt aus Famoxadon, Fluoroimid, Chlozolinat, Dichlozolin, Iprodion, Isovaledion, Myclozolin, Procymidon, Vinclozolin, Captafol, Captan, Ditalimfos, Folpet oder Thiochlorfenphim; oder
ein Dinitrophenol-Fungizid ist, ausgewählt aus Binapacryl, Dinobuton, Dinocap, Dinocap-4, Dinocap-6, Meptyldinocap, Dinocton, Dinopenton, Dinosulfon, Dinoterbon oder DNOC; oder
ein Dithiocarbamatfungizid ist, ausgewählt aus Amobam, Asomat, Azithiram, Carbamorph, Cufraneb, Cuprobam, Disulfiram, Ferbam, Metam, Nabam, Tecoram, Thiram, Urbacid, Ziram, Dazomet, Etem, Milneb, Mancopper, Mancozeb, Maneb, Metiram, Polycarbamat, Propineb oder Zineb; oder
ein Dithiolanfungizid ist, ausgewählt aus Isoprothiolan oder Saijunmao; oder
ein Hydrazidfungizid ist, ausgewählt aus Benquinox oder Saijunmao; oder
ein Imidazol-Fungizid ist, ausgewählt aus Cyazofamid, Fenamidon, Fenapanil, Glyodin, Iprodion, Isovaledion, Pefurazoat, Triazoxid, Climbazol, Clotrimazol, Imazalil, Oxpoconazol, Prochloraz oder Triflumizol; oder
ein anorganisches Fungizid ist, ausgewählt aus Kaliumazid, Kaliumthiocyanat, Natriumazid, Schwefel, Quecksilberchlorid, Quecksilberoxid, Quecksilberchlorid, (3-Ethoxypropyl)quecksilberbromid, Ethylquecksilberacetat, Ethylquecksilberbromid, Ethylquecksilberchlorid, Ethylquecksilber-2,3-Dihydroxypropylmercaptid, Ethylquecksilberphosphat, N-(Ethylquecksilber)-p-Toluolsulfonanilid, Hydrargaphen, 2-Methoxyethylquecksilberchlorid, Methylquecksilberbenzoat, Methylquecksilberdicyandiamid, Methylquecksilberpentachlorophenoxid, 8-Phenylmercurioxychinolin, Phenylmercuriurea, Phenylquecksilberacetat, Phenylquecksilberchlorid, Phenylquecksilberderivat von Pyrocatechol, Phenylquecksilbernitrat, Phenylquecksalicylat, Thiomersal oder Tolylquecksilberacetat; oder
ein Organophosphorfungizid ist, ausgewählt aus Ampropylfos, Ditalimfos, EBP, Edifenphos, Fosetyl, Hexylthiofos, Inezin, Iprobenfos, Izopamfos, Kejunlin, Phosdiphen, Pyrazophos, Tolclofos-Methyl oder Triamiphos; oder
ein zinnorganisches Fungizid ist, ausgewählt aus Decafentin, Fentin oder Tributylzinnoxid; oder
ein Oxathiinfungizid ist, ausgewählt aus Carboxin oder Oxycarboxin; oder
ein Oxazolfungizid ist, ausgewählt aus Chlozolinat, Dichlozolin, Drazoxolon, Famoxadon, Hymexazol, Metazoxolon, Myclozolin, Oxadixyl, Oxathiapiprolin, Pyrisoxazol oder Vinclozolin; oder
ein Pyrimidinfungizid ist, ausgewählt aus Bupirimat, Diflumetorim, Dimethirimol, Ethirimol, Fenarimol, Ferimzone, Nuarimol, Triarimol, Cyprodinil, Mepanipyrim oder Pyrimethanil; oder
ein Pyrrolfungizid ist, ausgewählt aus Dimetachlon, Fenpiclonil, Fludioxonil oder Fluoroimid; oder
ein Chinolinfungizid ist, ausgewählt aus Ethoxyquin, Halacrinat, 8-Hydroxyquinolinsulfat, Ipflufenoquin, Chinacetol, Chinofumelin, Quinoxyfen oder Tebufloquin; oder
ein Chinonfungizid ist, ausgewählt aus Chloranil, Dichlon oder Diathianon; oder
ein Chinoxalinfungizid ist, ausgewählt aus Chinomethionat, Chlorquinox oder Thioquinox; oder
ein Thiadiazol-Fungizid ist, ausgewählt aus Etridiazol, Saisentong, Thiodiazol-Kupfer oder Zinkthiazol; oder
ein Thiazolfungizid ist, ausgewählt aus Dichlobentiazox, Ethaboxam, Isotianil, Metsulfovax, Octhilinon, Oxathiapiprolin, Thiabendazol oder Thifluzamid; oder
ein Thiazolidinfungizid ist, ausgewählt aus Flutianil oder Thiadifluor; oder
ein Thiocarbamat-Fungizid ist, ausgewählt aus Methasulfocarb oder Prothiocarb; oder
ein Thiophenfungizid ist, ausgewählt aus Ethaboxam, Isofetamid oder Silthiofam; oder
Anilazin ist, oder
ein Triazolopyrimidin-Fungizid ist, ausgewählt aus Ametoctradin; oder
ein Harnstoff-Fungizid ist, ausgewählt aus Bentaluron, Pencycuron oder Quinazamid; oder
ein Zinkfungizid ist, ausgewählt aus Acypetacs-Zink, Kupfer-Zink-Chromat, Cufraneb, Mancozeb, Metiram, Polycarbamat, Polyoxorim-Zink, Propineb, Zinknaphthenat, Zinkthiazol, Zinktrichlorphenat, Zineb oder Ziram; oder
ein nicht klassifiziertes Fungizid ist, ausgewählt aus Acibenzolar, Acypetacs, Allylalkohol, Benzalkoniumchlorid, Bethoxazin, Bromothalonil, Chitosan, Chlorpikrin, DBCP, Dehydroessigsäure, Diclomezin, Diethylpyrocarbonat, Dipymetitron, Ethylicin, Fenaminosulf, Fenitropan, Fenpropidin, Formaldehyd, Furfural, Hexachlorbutadien, Methylisothiocyanat, Nitrostyrol, Nitrothal-isopropyl, OCH, Pentachlorphenyllaurat, 2-Phenylphenol, Phthalid, Piperalin, Propamidin, Proquinazid, Pyroquilon, Natrium-o-phenylphenoxid, Spiroxamin, Sultropen, Thicyofen oder Tricyclazol.

9. Zusammensetzung, die eine Kombination nach einem der Ansprüche 1 - 8 umfasst.

10. Verfahren zur Bekämpfung von Pilzkrankheiten bei Pflanzen, wobei das Verfahren das Aufbringen einer Kombination nach Anspruch 1 - 8 oder einer Zusammensetzung nach Anspruch 9 auf den Ort umfasst.

11. Resistenzmanagementverfahren bei Pflanzen, umfassend die Anwendung einer Kombination nach Anspruch 1 - 8 oder einer Zusammensetzung nach Anspruch 9 auf die Pflanzen.

12. Verfahren zur Verhinderung von Resistenzen bei Pilzen, wobei das Verfahren das Aufbringen einer Kombination nach Anspruch 1 - 8 oder einer Zusammensetzung nach Anspruch 9 auf den Locus der Pflanze umfasst.

13. Kit, umfassend eine fungizide Kombination nach einem der Ansprüche 1 - 8 oder eine Zusammensetzung nach Anspruch 9.

14. Kit nach Anspruch 13, umfassend eine Anleitung zur Verwendung der Kombinationen nach Anspruch 1 - 8 gegen Weizenkopffäule.

15. Kit nach Anspruch 13 oder Anspruch 14, umfassend Anweisungen zur Durchführung eines Resistenzmanagementverfahrens und/oder eines Verfahrens zur Kontrolle/Vorbeugung von Pilzkrankheiten an einem Ort unter Verwendung der Kombination nach Anspruch 1 - 8 oder unter Verwendung einer Zusammensetzung nach Anspruch 9.

## Revendications

1. Combinaison fongicide comprenant :
a) du benzovindiflupyr ; et
b) du phénamacril et/ou du benzamacril.

2. Combinaison selon la revendication 1 comprenant un troisième fongicide.

3. Combinaison selon la revendication 2, dans laquelle le troisième fongicide est des fongicides de type morpholine, des fongicides de type triazole, des fongicides de type acide acylaminé, des fongicides de type anilide, des fongicides de type antibiotique, des fongicides de type strobilurine, des fongicides de type aromatique, des fongicides de type arsenical, des fongicides de type arylphénylcétone, des fongicides de type benzimidazole, des fongicides de type précurseur de benzimidazole, des fongicides de type benzothiazole, des fongicides de type diphényle ponté, des fongicides de type carbamate, des fongicides de type conazole, des fongicides de type cuivre, des fongicides de type dicarboximide, des fongicides de type dinitrophénol, des fongicides de type dithiocarbamate, des fongicides de type dithiolane, des fongicides de type hydrazide, des fongicides de type imidazole, des fongicides de type inorganique, des fongicides de type organophosphoré, des fongicides de type organoétain, des fongicides de type oxathiine, des fongicides de type oxazole, des fongicides de type pyrimidine, des fongicides de type pyrrole, des fongicides de type quinoléine, des fongicides de type quinone, des fongicides de type quinoxaline, des fongicides de type thiadiazole, des fongicides de type thiazole, des fongicides de type thiazolidine, des fongicides de type thiocarbamate, des fongicides de type thiophène, des fongicides de type triazine, des fongicides de type triazolopyrimidine, des fongicides de type urée, des fongicides de type zinc, des fongicides non classifiés et des mélanges de ceux-ci.

4. Combinaison selon l'une quelconque des revendications précédentes comprenant du benzovindiflupyr ; du phénamacril ou du benzamacril ou une combinaison de ceux-ci ; et au moins un fongicide de type triazole.

5. Combinaison selon l'une quelconque des revendications précédentes comprenant du benzovindiflupyr ; du phénamacril ou du benzamacril ou une combinaison de ceux-ci ; et au moins un fongicide de type strobiliurine.

6. Combinaison selon l'une quelconque des revendications précédentes comprenant du benzovindiflupyr ; du phénamacril ou du benzamacril ou une combinaison de ceux-ci ; et au moins un fongicide de type benzimidazole.

7. Combinaison selon l'une quelconque des revendications précédentes comprenant du benzovindiflupyr ; du phénamacril ou du benzamacril ou une combinaison de ceux-ci ; et un fongicide de type inorganique.

8. Combinaison selon l'une quelconque des revendications 2 à 7, dans laquelle le troisième fongicide :
est un fongicide de type morpholine sélectionné parmi l'aldimorphe, le benzamorphe, le carbamorphe, le diméthomorphe, le dodémorphe, le fenpropimorphe, le flumorphe ou le tridémorphe ; ou
est un fongicide de type triazole sélectionné parmi l'amisulbrom, le bitertanol, le fluotrimazole, le triazbutil, l'azaconazole, le bromuconazole, le cyproconazole, le diclobutrazol, le difénoconazole, le diniconazole, le diniconazole-M, l'époxiconazole, l'étaconazole, le fenbuconazole, le fluquinconazole, le flusilazole, le flutriafol, le furconazole, le furconazole-cis, l'hexaconazole, le huanjunzuo, l'imibenconazole, l'ipconazole, le metconazole, le myclobutanil, le penconazole, le propiconazole, le prothioconazole, le quinconazole, le siméconazole, le tébuconazole, le tétraconazole, le triadiméfon, le triadiménol, le triticonazole, l'uniconazole, ou l'uniconazole-P ; ou
est un fongicide de type acide acylaminé sélectionné parmi le bénalaxyl, le bénalaxyl-M, le furalaxyl, le métalaxyl, le métalaxyl-M, le pefurazoate ou le valifénalate ; ou
est un fongicide de type anilide sélectionné parmi le bénalaxyl, le bénalaxyl-M, le bixafen, le boscalid, la carboxine, le fenhexamide, le fluxapyroxad, l'isotianil, le métalaxyl, le métalaxyl-M, le metsulfovax, l'ofurace, l'oxadixyl, l'oxycarboxine, le penflufen, le pyracarbolide, le pyraziflumid, le sédaxane, le thifluzamide, le tiadinil, ou le vangard ; ou
est un fongicide de type antibiotique sélectionné parmi l'auréofungine, la blasticidine-S, le cycloheximide, le fenpicoxamide, la griséofulvine, la kasugamycine, la moroxydine, la natamycine, les polyoxines, le polyoxorim, la streptomycine, ou la validamycine ; ou
est un fongicide de type strobilurine sélectionné parmi la fluoxastrobine, la mandestrobine, le pyribencarb, l'azoxystrobine, la bifujunzhi, la coumoxystrobine, l'enoxastrobine, la flufénoxystrobine, la jiaxiangjunzhi, la picoxystrobine, la pyraoxystrobine, la pyraclostrobine, la pyramétostrobine, le triclopyricarb, la dimoxystrobine, la fénaminstrobine, la métominostrobine, l'orysastrobine, le kresoxim-méthyle ou la trifloxystrobine ; ou
est un fongicide de type aromatique sélectionné parmi le biphényle, les chlorodinitronaphtalènes, le chloroneb, le chlorothalonil, le crésol, le dicloran, le fenjuntong, l'hexachlorobenzène, le pentachlorophénol, le quintozène, le pentachlorophénate de sodium, le tecnazène, les thiocyanatodinitrobenzènes, ou les trichlorotrinitrobenzènes ; ou
est un fongicide de type arsenical sélectionné parmi l'asomate ou l'urbacide ; ou
est un fongicide de type arylphénylcétone sélectionné parmi la métrafénone ou la pyriofénone ; ou
est un fongicide de type benzimidazole sélectionné parmi l'elbendazole, le bénomyl, le carbendazime, le chlorfénazole, le cypendazole, le débacarb, le fubéridazole, le mecarbinzid, le rabenzazole ou le thiabendazole ; ou
est un fongicide de type précurseur de benzimidazole sélectionné parmi le furophanate, le thiophanate ou le thiophanateméthyl ; ou
est un fongicide de type benzothiazole sélectionné parmi le bentaluron, le benthiavalicarb, le benthiazole, la chlobenthiazone, le dichlobentizox, ou le probénazole ; ou
est un fongicide de type diphényle ponté sélectionné parmi le bithionol, le dichlorophène, la diphénylamine, l'hexachlorophène, et le parinol ; ou
est un fongicide de type carbamate sélectionné parmi le benthiavalicarb, le furophanate, l'iodocarb, l'iprovalicarb, le picarbutrazox, le propamocarb, le pyribencarb, le thiophanate, le thiophanateméthyl, le tolprocarb, l'albendazole, le bénomyle, le carbendazime, le cypendazole, le débacarbe, le mecarbinzid, le diéthofencarbe, la pyraclostrobine, la pyramétostrobine, et le triclopyricarbe ; ou
est un fongicide de type conazole sélectionné parmi le climbazole, le clotrimazole, l'imazalil, l'oxpoconazole, le prochloraze, le trilfumizole, l'azaconazole, le bromuconazole, le cyproconazole, le diclobutrazol, le difénoconazole, le diniconazole, le diniconazole-M, l'époxiconazole, l'étaconazole, le fenbuconazole, le fluquinconazole, le flusilazole, le flutriafol, le furconazole, le furconazole-cis, l'hexaconazole, l'imibenconazole, l'ipconazole, l'ipfentrifluconazole, le méfentrifluconazole, le metconazole, le myclobutanil, le penconazole, le propiconazole, le prothioconazole, le quinconazole, le siméconazole, le tébuconazole, le tétraconazole, le triadiméfon, le triadiménol, le triticonazole, l'uniconazole et l'uniconazole-P ; ou
est un fongicide de type cuivre sélectionné parmi l'acypetacs-cuivre, le carbonate de cuivre basique, le sulfate de cuivre basique, la bouillie bordelaise, la bouillie bourguignonne, la bouillie de Cheshunt, l'acétate de cuivre, l'hydroxyde de cuivre, le naphténate de cuivre, l'oléate de cuivre, l'oxychlorure de cuivre, le silicate de cuivre, le sulfate de cuivre, le chromate de cuivre-zinc, le cufraneb, le cuprobam, l'oxyde cuivreux, le mancopper, l'oxine-cuivre, le saisentong, ou le thiodiazole-cuivre ; ou
est un fongicide de type dicarboximide sélectionné parmi la famoxadone, le fluoroimide, le chlozolinate, la dichlozoline, l'iprodione, l'isovalédione, la myclozoline, la procymidone, la vinclozoline, le captafol, le captane, le ditalimfos, le folpet ou le thiochlorfenphim ; ou
est un fongicide de type dinitrophénol sélectionné parmi le binapacryl, le dinobuton, le dinocap, le dinocap-4, le dinocap-6, le meptyldinocap, le dinocton, le dinopenton, le dinosulfon, le dinoterbon ou le DNOC ; ou
est un fongicide de type dithiocarbamate sélectionné parmi l'amobam, l'asomate, l'azithiram, le carbamorphe, le cufraneb, le cuprobam, le disulfirame, le ferbam, le metam, le nabam, le tecoram, le thirame, l'urbacide, le ziram, le dazomet, l'etem, le milneb, le mancopper, le mancozeb, le maneb, le metiram, le polycarbamate, le propinèbe ou le zinèbe ; ou
est un fongicide de type dithiolane sélectionné parmi l'isoprothiolane ou le saijunmao ; ou
est un fongicide de type hydrazide sélectionné parmi le benquinox ou le saijunmao ; ou
est un fongicide de type imidazole sélectionné parmi le cyazofamid, la fénamidone, le fénapanil, la glyodine, l'iprodione, l'isovalédione, le pefurazoate, le triazoxide, le climbazole, le clotrimazole, l'imazalil, l'oxpoconazole, le prochloraze ou le triflumizole ; ou
est un fongicide de type inorganique sélectionné parmi l'azoture de potassium, le thiocyanate de potassium, l'azoture de sodium, le soufre, le chlorure mercurique, l'oxyde mercurique, le chlorure mercureux, le bromure de (3-éthoxypropyl)mercure, l'acétate d'éthylmercure, le bromure d'éthylmercure, le chlorure d'éthylmercure, le 2,3-dihydroxypropyl mercaptide d'éthylmercure, le phosphate d'éthylmercure, le N-(éthylmercure)-p-toluènesulfonanilide, l'hydrargaphène, le chlorure de 2-méthoxyéthylmercure, le benzoate de méthylmercure, le dicyandiamide de méthylmercure, le pentachlorophénoxyde de méthylmercure, la 8-phénylmercurioxyquinoléine, la phénylmercuriurée, l'acétate de phénylmercure, le chlorure de phénylmercure, le dérivé phénylmercure de pyrocatéchol, le nitrate de phénylmercure, le salicylate de phénylmercure, le thiomersal, ou l'acétate de tolylmercure ; ou
est un fongicide de type organophosphoré sélectionné parmi l'ampropylfos, le ditalimfos, l'EBP, l'edifenphos, le fosétyl, l'hexylthiofos, l'inezin, l'iprobenfos, l'izopamfos, le kejunlin, le phosdiphen, le pyrazophos, le tolclofos-méthyle ou le triamiphos ; ou
est un fongicide de type organoétain sélectionné parmi le décafentine, la fentine ou l'oxyde de tributylétain ; ou
est un fongicide de type oxathiine sélectionné parmi la carboxine ou l'oxycarboxine ; ou
est un fongicide de type oxazole sélectionné parmi le chlozolinate, la dichlozoline, le drazoxolon, la famoxadone, l'hymexazol, le métazoxolon, la myclozoline, l'oxadixyl, l'oxathiapiproline, le pyrisoxazole ou la vinclozoline ; ou
est un fongicide de type pyrimidine sélectionné parmi le bupirimate, le diflumétorim, le diméthirimol, l'éthirimol, le fénarimol, la férimzone, le nuarimol, le triarimol, le cyprodinil, le mépanipyrim ou le pyriméthanil ; ou
est un fongicide de type pyrrole sélectionné parmi la dimétachlone, le fenpiclonil, le fludioxonil ou le fluoroimide ; ou
est un fongicide de type quinoléine sélectionné parmi l'éthoxyquine, l'halacrinate, le sulfate de 8-hydroxyquinoléine, l'ipflufenoquine, le quinacétol, la quinofumeline, le quinoxyfen ou la tebufloquine ; ou
est un fongicide de type quinone sélectionné parmi le chloranil, la dichlone ou le diathianon ; ou
est un fongicide de type quinoxaline sélectionné parmi le chinométhionat, le chlorquinox ou le thioquinox ; ou
est un fongicide de type thiadiazole sélectionné parmi l'étridiazole, le saisentong, le thiodiazole-cuivre ou le zinc thiazole ; ou
est un fongicide de type thiazole sélectionné parmi le dichlobentiazox, l'éthaboxam, l'isotianil, le metsulfovax, l'octhilinone, l'oxathiapiproline, le thiabendazole ou le thifluzamide ; ou
est un fongicide de type thiazolidine sélectionné parmi le flutianil ou le thiadifluor ; ou
est un fongicide de type thiocarbamate sélectionné parmi le méthasulfocarbe ou le prothiocarbe ; ou
est un fongicide de type thiophène sélectionné parmi l'éthaboxam, l'isofétamide ou le silthiofam ; ou
est l'anilazine ; ou
est un fongicide de type triazolopyrimidine sélectionné parmi l'amétoctradine ; ou
est un fongicide de type urée sélectionné parmi le bentaluron, le pencycuron, ou le quinazamid ; ou
est un fongicide de type zinc sélectionné parmi l'acypetacs-zinc, le chromate de cuivre-zinc, le cufraneb, le mancozeb, le metiram, le polycarbamate, le polyoxorim-zinc, le propinèbe, le naphténate de zinc, le thiazole de zinc, le trichlorophénate de zinc, le zinèbe, ou le zirame ; ou
est un fongicide non classifié sélectionné parmi l'acibenzolar, l'acypetacs, l'alcool allylique, le chlorure de benzalkonium, la béthoxazine, le bromothalonil, le chitosan, la chloropicrine, le DBCP, l'acide déhydroacétique, la diclomézine, le pyrocarbonate de diéthyle, la dipymétitrone, l'éthylicine, le fenaminosulf, le fénitropan, la fenpropidine, le formaldéhyde, le furfural, l'hexachlorobutadiène, l'isothiocyanate de méthyle, le nitrostyrène, le nitrothal-isopropyle, l'OCH, le laurate de pentachlorophényle, le 2-phénylphénol, le phtalide, la pipéraline, la propamidine, le proquinazid, le pyroquilon, l'o-phénylphénoxyde de sodium, la spiroxamine, le sultropène, le thicyofène ou le tricyclazole.

9. Composition comprenant une combinaison selon les revendications 1 à 8.

10. Méthode de lutte contre des maladies fongiques chez les plantes, ladite méthode comprenant l'application au locus d'une combinaison selon les revendications 1 à 8 ou d'une composition selon la revendication 9.

11. Méthode de gestion de la résistance dans les cultures, comprenant l'application auxdites cultures d'une combinaison selon les revendications 1 à 8 ou d'une composition selon la revendication 9.

12. Méthode de prévention de résistance chez les champignons, ladite méthode comprenant l'application au locus de la plante, d'une combinaison selon les revendications 1 à 8 ou d'une composition selon la revendication 9.

13. Kit comprenant une combinaison fongicide selon les revendications 1 à 8 ou une composition selon la revendication 9.

14. Kit selon la revendication 13 comprenant des instructions pour l'utilisation desdites combinaisons selon les revendications 1 à 8 contre la brûlure de l'épi de blé.

15. Kit selon la revendication 13 ou la revendication 14 comprenant des instructions pour l'exécution d'une méthode de gestion de la résistance et/ou d'une méthode de lutte contre/prévention des maladies fongiques à un locus à l'aide de la combinaison selon les revendications 1 à 8 ou à l'aide d'une composition selon la revendication 9.
